# EUROPÄISCHE PATENTSCHRIFT

(11) **EP 4 201 165 B1**
(45) Veröffentlichungstag und Bekanntmachung des Hinweises auf die Patenterteilung: **06.11.2024**
(21) Anmeldenummer: 22214621.9
(22) Anmeldetag: 19.12.2022
(51) Int. Cl.: A01B 3/30, A01B 15/14

(54) **VOLLDREHPARALLELPFLUG**
FULLY REVERSIBLE PARALLEL PLOUGH
CHARRUE PARALLELE A RETOURNEMENT COMPLET

(30) Priorität: 21.12.2021 DE 102021214805
(43) Veröffentlichungstag der Anmeldung: 28.06.2023
(73) Patentinhaber: LEMKEN GmbH & Co. KG, 46519 Alpen (DE)
(72) Erfinder: Mäsing, Stefan, 46325 Borken (DE); Bergemann, Christian, 46244 Bottrop (DE)

(56) Entgegenhaltungen:
- DE-A1- 3 412 512
- DE-B- 1 109 931
- DE-B1- 2 756 548

## Beschreibung

### TECHNISCHES GEBIET

Die vorliegende Erfindung betrifft einen Pflug zum Bearbeiten einer Erdoberfläche entlang einer Arbeitsrichtung.

### HINTERGRUND

In den vergangenen Jahrzehnten haben sich überwiegend Volldrehpflüge zur Bearbeitung von Ackerflächen durchgesetzt. Ein Volldrehpflug trägt sowohl linkswendende als auch rechtswendende Pflugkörper, wobei abhängig von der Fahrrichtung des Pfluges entweder die linkswendenden oder die rechtswendenden Pflugkörper zum Wechselwirken mit der Erdoberfläche in ihre Arbeitsstellung gedreht werden können. Anders als bei einem Beetpflug, der typischerweise nur rechtswendende Pflugkörper trägt, ist es beim Volldrehpflug somit möglich am Ende des Feldes eine Kehrtwende zu machen, hierbei z.B. von der rechtswendenden auf die linkswendende Arbeitsstellung umzustellen und die Rückfahrt direkt angrenzend an die zuletzt gezogene Furche durchzuführen. Um das gleiche Feld mit einem Beetpflug zu pflügen, muss das Feld in zumindest zwei Teile unterteilt werden, wobei jeweils in einem Teil die Hinfahrten und in dem anderen Teil die Rückfahrten gemacht werden. Dabei gibt es im Wesentlichen die Möglichkeit von der Mitte des Feldes aus zusammenschlagend pflügend zu starten oder an den beiden Außenseiten des Feldes auseinanderschlagend pflügend zu starten. Zu dem Nachteil der vielen Überfahrten am Vorgewende um von der Endposition der Hinfahrt zur Startposition der Rückfahrt zu gelangen, die beim Pflügen mit einem Beetpflug nicht ausbleiben und u.a. zur Bodenverdichtung beitragen, kommt hinzu, dass sich im Laufe der Zeit beim zusammenschlagenden Pflügen ein Hügel in der Mitte und Gräben an den Außenseiten des Feldes bilden bzw. sich beim auseinanderschlagenden Pflügen das Umgekehrte einstellt.

Bei den Volldrehpflügen aus dem Stand der Technik sind zumeist Paare aus rechts- und linkswendenden Pflugkörpern an einem Pflugbalken befestigt, der sich in einer Arbeitsstellung weder entlang noch senkrecht, sondern in einem schrägen Winkel zur Arbeitsrichtung erstreckt. Die Pflugkörperpaare sind entlang des Pflugbalkens in Reihe montiert und weisen daher sowohl in Arbeitsrichtung als auch in einer Richtung senkrecht dazu einen Abstand auf. Durch schräge Ausrichtung des Pflugbalkens ist sichergestellt, dass beim Drehen des Pflugbalkens zum Wechseln der Arbeitsstellung genügend Bodenfreiheit herrscht. Diese Anordnung geschieht allerdings auf Kosten einer erheblichen Länge des Pfluges in Arbeitsrichtung, welche umso größer wird, wenn eine große Arbeitsbreite des Pfluges gewünscht ist. Weitere Bodenbearbeitungsgeräte, die an den Pflug angehängt werden können, vergrößern nochmals die Gesamtlänge des Gespanns. Ein entsprechend großes Vorgewende muss bei der Feldbestellung einplant werden, um ein Ausheben des Pflugs, Wenden des Gespanns, und Wiedereinsetzen des Pflugs am Ende des Feldes zu ermöglichen.

Bei einem Parallelpflug, wie zum Beispiel aus EP 2 949 192 A1 bekannt, gibt es den Nachteil der großen Abmessung in Arbeitsrichtung nicht. Hier werden die Pflugkörper ohne einen Längsabstand nur in einer Breitenrichtung zueinander beabstandet auf einem Pflugbalken befestigt, der sich im Wesentlichen senkrecht zur Arbeitsrichtung erstreckt. Dadurch kann der Pflug in Arbeitsrichtung sehr kompakt gestaltet werden. Der aus EP 2 949 192 A1 bekannte Parallelpflug ist jedoch ein Beetpflug und kein Drehpflug und weist daher die oben ausgeführten Nachteile auf.

DE 3412512 A1 offenbart einen als Drehpflug einsetzbaren Bodenkultivator, der einen sich senkrecht zur Arbeitsrichtung erstreckenden Träger aufweist, an dem vier Pflugkörper befestigt sind. Der Träger ist über eine parallel zur Arbeitsrichtung ausgerichtete Drehachse mit dem Grundrahmen des Bodenkultivators verbunden, wobei sich der Drehpunkt des Trägers etwa bei einem Viertel der Länge des Trägers befindet, wodurch der Träger in einen längeren und einen kürzeren Abschnitt unterteilt wird. Diese Anordnung ist gewählt, um ausreichende Bodenfreiheit bei der Drehung des Trägers um 180° um die Drehachse sicherstellen zu können. Eine Erhöhung der Anzahl der Pflugkörper, um insgesamt eine Arbeitsbreite zu vergrößern, wäre nach dieser Erfindung nur möglich, indem der längere Abschnitt des Trägers verlängert und die Anzahl der Pflugkörper auf diesem Abschnitt erhöht würde. Der hierdurch entstehende zusätzliche Hebel hätte aber zur Folge, dass sowohl ein großes Drehmoment zum Drehen des Trägers erforderlich wäre, als auch beim Pflügen große einseitige Hebelkräfte auf die Lagerung der Drehachse wirken.

### DARSTELLUNG DER ERFINDUNG

Vor diesem Hintergrund besteht eine Aufgabe der vorliegenden Erfindung darin, einen Parallelpflug als Volldrehpflug bereitzustellen, der eine gegenüber bisherigen Parallelpflügen erhöhte Arbeitsbreite ermöglicht, ohne die obigen Nachteile eines großen Widerstands beim Drehen des Trägers oder großer einseitiger Hebelkräfte auf die Lagerung der Drehachse mit sich zu bringen.

Diese Aufgabe wird durch einen Pflug nach Anspruch 1 gelöst. Vorteilhafte weitere Merkmale der Erfindung ergeben sich aus den Unteransprüchen.

Gemäß einem Aspekt der vorliegenden Erfindung wird ein Pflug zum Bearbeiten einer Erdoberfläche entlang einer Arbeitsrichtung bereitgestellt, der zumindest zwei Querrahmen aufweist, welche sich in einer Arbeitsstellung entlang einer Breitenrichtung quer zur Arbeitsrichtung erstrecken, um sich zu einer Arbeitsbreite zu ergänzen, wobei jeder der Querrahmen zumindest einen rechtswendenden Pflugkörper und zumindest einen linkswendenden Pflugkörper trägt, wobei jedem der Querrahmen jeweils eine Wendeachse zugeordnet ist, um die er drehbar angeordnet ist, wobei die Wendeachsen parallel zur Arbeitsrichtung ausgerichtet und in der Breitenrichtung beabstandet nebeneinander angeordnet sind.

Dass sich die Querrahmen quer zur Arbeitsrichtung erstrecken bedeutet, dass sie sich zwar im Wesentlichen quer zur Arbeitsrichtung erstrecken aber nicht notwendigerweise genau in einem 90° Winkel, sondern dass Abweichungen davon bis zu 10° möglich sind, die zudem für jeden Querrahmen unterschiedlich ausfallen können. Auch können die Wendeachsen eine Abweichung von bis zu 10° von der parallelen Ausrichtung zur Arbeitsrichtung haben. Die Arbeitsbreite entspricht im Wesentlichen der maximalen Gesamtbreite des Pfluges. Allerdings können die Querrahmen überhängende Anbauteile oder Abschnitte der von den Querrahmen getragenen Pflugkörper, die sich an den äußeren Enden der Querrahmen befinden, die von den Querrahmen bestimmte Arbeitsbreite überragen und zu einer größeren Gesamtbreite des Pfluges führen.

Da bei der vorliegenden Erfindung der Pflug zumindest zwei Querrahmen aufweist, die sich in ihrer Arbeitsstellung zur Arbeitsbreite ergänzen, kann die Abmessungen jedes einzelnen davon kleiner sein, als bei einem Pflug mit der gleichen Arbeitsbreite, der nur einen einzigen Querrahmen hat. Hierdurch wird ermöglicht, dass für eine Drehung der Querrahmen, um von einer linkswendenden zu einer rechtswendenden Arbeitsstellung oder umgekehrt zu gelangen, weniger Platz, d.h. insbesondere weniger Bodenfreiheit, benötigt wird. Für eine solche Drehung der Querrahmen müssen die Wendeachsen somit relativ zur Erboberfläche weniger angehoben und/oder weniger aus ihrer zur Arbeitsrichtung parallelen Ausrichtung verkippt werden, um ausreichende Bodenfreiheit zu gewährleisten.

Bevorzugt weist der Pflug für je eine oder mehrere der Wendeachsen einen Drehmechanismus zum Drehen des jeweiligen Querrahmens oder der jeweiligen Querrahmen um seine Wendeachse oder ihre Wendeachsen zwischen einer linkswendenden Arbeitsstellung und einer rechtswendenden Arbeitsstellung auf. Dabei weist der Drehmechanismus zumindest einen Stellantrieb auf.

Durch einen Drehmechanismus mit Stellantrieb, der für jede Wendeachse getrennt vorgesehen sein kann, aber auch für mehrere Wendeachsen gemeinsam, wird ein Umstellen des Pfluges zwischen einer linkswendenden Arbeitsstellung und einer rechtswendenden Arbeitsstellung und umgekehrt besonders einfach ermöglicht. Der Drehmechanismus bzw. die Drehmechanismen können dabei so ausgestaltet sein, dass die Drehung der Querrahmen komplett unabhängig voneinander oder gemeinsam durchgeführt werden kann. Der Stellantrieb kann zum Beispiel einen Hydraulikzylinder, Hydraulikmotor, Pneumatikzylinder, Pneumatikmotor und/oder Elektromotor aufweisen. Es ist nicht notwendigerweise erforderlich, dass für jeden Querrahmen ein eigener Drehmechanismus existiert. So können zum Beispiel über ein Getriebe mehrere Querrahmen derart verbunden sein, dass ein Drehen eines Querrahmens das Drehen eines anderen mitbewirkt. Ein solches Getriebe wäre Teil des anspruchsgemäßen Drehmechanismus.

Bevorzugt ist der Drehmechanismus derart ausgestaltet, dass der Querrahmen in der linkswendenden Arbeitsstellung und/oder der rechtswendenden Arbeitsstellung starr festgesetzt ist, oder dass die linkswendende Arbeitsstellung und/oder die rechtswendende Arbeitsstellung des jeweiligen Querrahmens mittels eines mechanischen Neigungsanschlags oder einer zentralen Neigungseinstellungseinrichtung verstellbar ist.

Die starre Festsetzung der Querrahmen in den Endlagen der rechtswendenden und linkswendenden Arbeitsstellungen verhindert ein ungewolltes Verdrehen der Querrahmen während sich der Pflug in einer Arbeitsstellung befindet. So kann zum Beispiel verhindert werden, dass eine Seite des Querrahmens während des Pflügens zur Erdoberfläche hinuntergezogen wird während sich die andere Seite in die entgegengesetzte Richtung bewegt. Das gleiche kann durch den mechanischen Neigungsanschlag oder die zentrale Neigungseinstellungseinrichtung erreicht werden.

Die Festsetzung kann weiterhin so erfolgen bzw. der mechanische Neigungsanschlag oder die zentrale Neigungseinstelleinrichtung kann so ausgebildet sein, dass die Querrahmen um einen Winkel von bis zu 200° um ihre Wendeachsen drehbar sind. Bedeutet zum Beispiel eine Neigungseinstellung von 0° und 180°, dass ein Querrahmen genau parallel zu einer Erdoberfläche in seiner rechtswendenden bzw. linkswendenden Arbeitsstellung ausgerichtet ist, lässt sich bei einem Drehwinkelbereich von 200° sowohl für die rechtswendenden also auch die linkswendenden Arbeitsstellung erreichen, dass Ausrichtung der Querrahmen um +/-10° von der parallelen Stellung abweichen kann. Es ist vorteilhaft, den Drehmechanismus, Neigungsanschläge oder Neigungseinstellungseinrichtung so auszugestalten, dass die Querrahmen in ihren Arbeitsstellungen in Breitenrichtung zueinander fluchten können. Dies stellt eine gleichförmige Bearbeitung einer ebenen Erdoberfläche über die gesamte Breite des Pfluges sicher. Insbesondere bei einem Drehmechanismus, der ein gegenläufiges Drehen benachbarter Querrahmen in und aus ihren jeweiligen Arbeitsstellungen bewirkt, können die Neigungsanschläge oder die Neigungseinstellungseinrichtung zusätzlich so ausgestaltet sein, dass die benachbarten Querrahmen in ihren Arbeitsstellungen in Breitenrichtung nicht zueinander fluchten müssen, sondern zueinander geneigt sind. So kann beim Bearbeiten der Erdoberfläche in einer Kuhle oder auf einem Hügel deren Unebenheit ausgeglichen werden, was sich besonders bei großen Arbeitsbreiten bemerkbar macht. Bei einer zentralen Neigungseinstellungseinrichtung kann besonders vorteilhaft sogar während des Pflügens eine Korrektur der Neigung der Querrahmen erfolgen, um sie z.B. den Unebenheiten der bearbeiteten Erdoberfläche anzupassen und/oder diese auszugleichen. Zudem ist es auch denkbar, Festsetzungen oder Neigungsanschläge bereitzustellen, in denen sich die Querrahmen außerhalb einer Arbeitsstellung befinden. Bedeutet zum Beispiel eine Neigungseinstellung von 0° und 180° die parallele Ausrichtung zur Erdoberfläche, kann eine solche zusätzliche Einstellung zum Beispiel bei 90° liegen, wodurch sich die Querrahmen senkrecht zur Erdoberfläche erstrecken.

Bevorzugt sind die Wendeachsen jeweils derart am jeweiligen Querrahmen angeordnet, dass sich eine Anzahl von Pflugkörpern, die der jeweilige Querrahmen auf einer Seite seiner Wendeachse trägt, von einer Anzahl von Pflugkörpern, die er auf der anderen Seite seiner Wendeachse trägt, höchstens um sechs, bevorzugt um fünf, weiter bevorzugt um vier, noch weiter bevorzugt um drei, weiter bevorzugt um zwei, besonders bevorzugt um eins, am meisten bevorzugt nicht, unterscheidet.

Bildlich gesprochen unterteilt dabei eine Ebene, die die Wendeachse eines jeweiligen Querrahmens enthält und die senkrecht zur Richtung steht, in der sich der Querrahmen erstreckt, den Querrahmen in zwei Seiten. "Auf einer Seite tragen" hat somit die Bedeutung, dass der Masseschwerpunkt eines Pflugkörpers entweder auf der einen Seite oder anderen Seite dieser Ebene liegt. Obwohl nicht ausgeschlossen ist, dass bei besonderen Ausführungsformen gar keine oder weniger Pflugkörper auf einer so durch die Wendeachse des jeweiligen Querrahmens bestimmten Seiten des Querrahmens getragen werden als auf der anderen, ist eine möglichst gleichmäßige Verteilung der Anzahl der Pflugkörper auf die beiden Seiten besonders bevorzugt. Denn hierdurch ist sichergestellt, dass das Gewicht des Querrahmens samt der von ihm getragenen Pflugkörper auf beiden Seiten annähernd gleich groß ist und der Querrahmen bezüglich seiner Wendeachse ausbalanciert ist. Dadurch wird für eine Drehung des Querrahmens ein möglichst geringes Drehmoment benötigt.

Bevorzugt ist eine Transportbreite des Pfluges kleiner als die Arbeitsbreite und beträgt bevorzugt zwischen 1,5 m und 4,5 m, weiter bevorzugt zwischen 2,5 m und 3,5 m, noch weiter bevorzugt zwischen 2,9 m und 3 m, wobei zumindest einer der Querrahmen in eine Transportstellung drehbar ist, in der er sich senkrecht zur Erdoberfläche erstreckt, wobei der zumindest eine Querrahmen bevorzugt durch Drehen um seine jeweilige Wendeachse in die Transportstellung drehbar ist.

Um die Transportfähigkeit des Pfluges auf öffentlichen Straßen ohne besondere Genehmigungen zu ermöglichen, befindet sich eine Transportbreite bevorzugt innerhalb dessen, was durch die Straßenverkehrsvorschriften erlaubt ist. Die für die Benutzung öffentlicher Straßen maximal erlaubte Breite eines Fahrzeuges beträgt in großen Teilen Europas 3 m. Für andere Gebiete können insbesondere größere Transportbreiten im Rahmen des dort gesetzlich Erlaubten aber ebenso in Betracht kommen.

Dass sich zumindest einer der Querrahmen in einer Transportstellung senkrecht zur Erdoberfläche erstreckt, bedeutet zwar, dass er sich im Wesentlichen senkrecht zur Erdoberfläche erstreckt, aber auch Abweichungen hiervon um bis zu 45°, gemäß einem eingeschränkten Verständnis um bis zu 30°, in einem weiter eingeschränkten Verständnis um bis zu 15° möglich sind. Ausschlaggebend für die Transportstellung ist, dass hierin die Transportbreite kleiner als die Arbeitsbreite wird. Für einen sicheren Transport des Pfluges kann die Transportstellung zudem über eine mechanische Festsetzung und/oder einen Neigungsanschlag und/oder eine Neigungseinstelleinrichtung fixiert sein. Dies verhindert eine ungewollte Verstellung der Ausrichtung der Querrahmen während des Transports.

Bevorzugt weist der Pflug zumindest drei der Querrahmen auf, wobei zumindest einer der Querrahmen von einem Ausleger an seiner Wendeachse getragen ist, wobei der Ausleger für ein Anheben des durch ihn getragenen Querrahmens aus der Arbeitsstellung um eine Aushebeachse drehbar ist, die parallel zur Wendeachse des Querrahmens ausgerichtet ist.

In dieser vorteilhaften Ausgestaltung kann eine größere Arbeitsbreite des Pfluges gegenüber einem Pflug mit nur zwei Querrahmen ermöglicht werden, da sich nun die zumindest drei Querrahmen in ihrer Arbeitsstellung zur Arbeitsbreite ergänzen. Um zu ermöglichen, dass alle Querrahmen problemlos in ihre Arbeitsstellung und aus ihrer Arbeitsstellung heraus drehbar sind, ist vorgesehen, dass zumindest einer der Querrahmen über einen Ausleger anhebbar und senkbar ist. Die Aushebeachse, auf der der Ausleger an dem Pflug gelagert ist, ist bevorzugt parallel zur Wendeachse des von dem Ausleger getragenen Querrahmens. Parallel bedeutet in diesen Zusammenhang im Wesentlichen parallel. Abweichungen bis zu 10° von der parallelen Ausrichtung sind möglich. Dadurch dass zumindest einer der Querrahmen über einen drehbaren Ausleger am Pflug befestigt ist, ist es zudem möglich, beim Anheben des Querrahmens aus der Arbeitsstellung seinen Abstand relativ zur Erdoberfläche zu vergrößern. Um zwischen seiner rechtswendenden und linkswendenden Arbeitsstellung zu wechseln, kann somit für eine Drehung dieses Querrahmens um seine Wendeachse, die Bodenfreiheit erhöht werden. Dies ermöglicht den Einsatz eines längeren Querrahmens, der eine größere Anzahl von Pflugkörpern tragen kann, d.h. die Arbeitsbreite des Pfluges kann mit einem Ausleger erhöht werden, wobei die Funktionalität als Volldrehpflug erhalten bleibt.

Bevorzugt ist für einen Pflug, der einen Ausleger aufweist, in der Arbeitsstellung die Aushebeachse oberhalb der Wendeachse und näher zu einer horizontalen Mitte des Pflugs als die Wendeachse angeordnet.

Wenn die Aushebeachse eines Auslegers oberhalb der Wendeachse seines zugehörigen Querrahmens und näher zu einer horizontalen Mitte des Pflugs als die Wendeachse angeordnet ist, wird bei einem Anheben des Querrahmes aus seiner Arbeitsstellung sein horizontaler Abstand zu einem benachbarten Querrahmen, der näher zur horizontalen Mitte des Pfluges liegt, vergrößert. Der vergrößerte Abstand zwischen diesen beiden Querrahmen ermöglicht somit, dass diese ohne Kollision zwischen ihren jeweiligen rechtswendenden und linkswendenden Arbeitsstellungen gedreht werden können. Nach einer erfolgten Umstellung der Arbeitsstellung kann der angehobene Querrahmen wieder abgesenkt und der Abstand zu seinem benachbarten Querrahmen wieder verringert werden.

Bevorzugt ist bei einer Ausführungsform, bei der zumindest einer der Querrahmen von einem Ausleger getragen wird und der eine Transportstellung einnehmen kann, der Ausleger in der Arbeitsstellung und in der Transportstellung gegenüber seinem Querrahmen jeweils gleich ausgerichtet.

Ein Querrahmen, der über einen Ausleger getragen wird, kann seine Transportstellung, in der sich der Querrahmen im Wesentlichen senkrecht zur Erdoberfläche erstreckt, dadurch einnehmen, indem er um seine Wendeachse und/oder seine Aushebeachse gedreht wird. Dabei kann der Grad der Drehung um die Aushebeachse und die Wendeachse beliebig kombiniert sein. In einer bevorzugten Ausführungsform ist der Querrahmen allerdings nur über die Aushebeachse in die Transportstellung gedreht, aber es ist keine relative Drehung zwischen Querrahmen und Ausleger über die Wendeachse erfolgt.

Bevorzugt weist der Pflug eine gleiche Anzahl an rechtswendenden Pflugkörpern und linkswendenden Pflugköpern auf. Dabei sind jeweils ein rechtswendender Pflugkörper und ein linkswendender Pflugkörper ein Pflugkörperpaar. Insbesondere tragen jeweils zwei benachbarte der Querrahmen zusammen eine Pflugkörperpaar-Anzahl P. Dabei sind die Pflugkörperpaare in der Arbeitsstellung jeweils um einen Paar-Abstand D in der Breitenrichtung voneinander beabstandet. Die Wendeachsen der benachbarten Querrahmen sind um einen Wendeachsen-Abstand W in der Breitenrichtung voneinander beabstandet, wobei W = P/2 * D gilt.

Der Paar-Abstand D, um den zwei benachbarte Pflugkörperpaare in Breitenrichtung beabstandet sind, bedeutet der Abstand zwischen sich entsprechenden Punkten der Pflugkörperpaare. So kann zum Beispiel der Paar-Abstand D durch sich entsprechende Befestigungspunkte der Pflugkörperpaare an dem Querrahmen gegeben sein. Mit Paar-Abstand D ist nicht der freie Raum zwischen den Pflugkörperpaaren gemeint. Ein Wendeachsen-Abstand W = P/2 * D stellt sicher, dass ein Pflugbild, dass der Pflug beim Bearbeiten der Erdoberfläche auf derselben hinterlässt, gleichmäßig ist. Insbesondere kann so ermöglicht werden, dass auch ein Bereich der Erdoberfläche, der sich zwischen zwei benachbarten von benachbarten Querrahmen getragenen Pflugkörpern befindet, gepflügt wird. Es ist dadurch zudem gewährleistet, dass für die im Paar-Abstand D beabstandeten Pflugkörper ausreichend Platz vorgesehen ist, sowohl wenn sich beide benachbarten Querrahmen jeweils in ihrer rechtswendenden Arbeitsstellung befinden, als auch wenn sich beide Querrahmen jeweils in ihrer linkswendenden Arbeitsstellung befinden.

Bevorzugt bestimmt bei einer Drehung eines ersten der Querrahmen um seine Wendeachse aus seiner Arbeitsstellung heraus und in seine Arbeitsstellung hinein ein erster Bereich der von dem ersten der Querrahmen getragenen Pflugkörper eine erste Umlaufbahn um die Wendeachse. Weiterhin bestimmt bei einer Drehung eines dem ersten Querrahmen benachbarten zweiten der Querrahmen um seine Wendeachse aus seiner Arbeitsstellung heraus und in seine Arbeitsstellung hinein ein zweiter Bereich der von dem zweiten der Querrahmen getragenen Pflugkörper eine zweite Umlaufbahn um die Wendeachse. Dabei schneiden sich die erste Umlaufbahn und die zweite Umlaufbahn, wobei die Drehung des ersten der Querrahmen und die Drehung des zweiten der Querrahmen ohne eine Kollision des ersten Bereichs mit dem zweiten Bereich durchführbar sind.

Durch die sich schneidenden Umlaufbahnen des von einem Pflugkörper auf einem ersten Querrahmen bestimmten ersten Bereichs und des von einem Pflugkörper auf einem zweitem dem ersten benachbarten Querrahmen bestimmten zweiten Bereichs kann ein Pflug besonders kompakt konstruiert sein. Gleichzeitig kann der Pflug aber so gestaltet sein, dass bei einer Drehung von benachbarten Querrahmen um ihre Wendeachsen die Pflugkörper nicht miteinander kollidieren.

Bevorzugt weist der Pflug eine Sequenzsteuerung auf, die Mittel zur Ausführung eines getakteten und/oder zwangsgesteuerten Drehungsverfahrens umfasst, wodurch zwei benachbarte der Querrahmen jeweils zeitlich versetzt und/oder geometrisch versetzt und/oder positionsgesteuert aus ihrer Arbeitsstellung heraus und in ihre Arbeitsstellung hinein gedreht werden.

Mittels einer solchen Sequenzsteuerung ist es möglich, geometrische Abmessungen des Pfluges, insbesondere der Querrahmen, der von den Querrahmen getragenen Pflugkörpern und/oder gegebenenfalls der Aushebeachse, und/oder der Positionen der Wendeachsen und/oder gegebenenfalls der Aushebeachse in solcher Art und Weise zu gestalten, die bei einer Drehung in die Arbeitsstellung hinein und aus der Arbeitsstellung heraus ohne Sequenzsteuerung unweigerlich zu Kollisionen der sich drehenden Teile des Pfluges führen würden. Insbesondere ist somit eine kompakte Bauweise des Pfluges möglich. Auch können für den Fall, dass die Wendeachsen über Drehmechanismen mit Stellantrieben verfügen, mit einer Sequenzsteuerung die von den Stellantrieben aufzubringenden Kräfte und Drehmomente zeitlich sequentiell verteilt werden, wodurch die benötigte Leistungsfähigkeit und in der Folge auch das Gewicht zum Beispiel eines Hydrauliksystems, Pneumatiksystems oder elektrischen Systems, das zum Betrieb der Stellantriebe verwendet wird, kleiner ist, als wenn alle Drehungen gleichzeitig durchgeführt würden.

Weitere Vorteile und Weiterbildungen der Erfindung ergeben sich aus der nachfolgenden Figurenbeschreibung und der Gesamtheit der Ansprüche.

### KURZE FIGURENBESCHREIBUNG

Fig. 1 zeigt eine Draufsicht eines bevorzugten Pfluges mit zwei Querrahmen, die sich in einer Arbeitsstellung befinden.
Fig. 2 zeigt eine Draufsicht einer anderen Ausführungsform eines bevorzugten Pfluges mit zwei Querrahmen, die sich in einer Arbeitsstellung befinden.
Fig. 3 zeigt eine Vorderansicht des in Fig. 2 dargestellten Pfluges.
Fig. 4 zeigt eine perspektivische Detailansicht eines Drehmechanismus eines Querrahmens des in Fig. 2 dargestellten Pfluges.
Fig. 5 zeigt eine Schnittansicht des in Fig. 4 dargestellten Drehmechanismus des Querrahmens.
Fig. 6 zeigt eine Schnittansicht des in Fig. 4 dargestellten Drehmechanismus des Querrahmens, wobei sich der Querrahmen nun in einer anderen Arbeitsstellung befindet.
Fig. 7 zeigt eine weitere Vorderansicht des in Fig. 3 dargestellten Pfluges, wobei sich die Querrahmen nun in einer Transportstellung befinden.
Fig. 8 zeigt eine Vorderansicht eines bevorzugten Pfluges mit drei Querrahmen, die sich in einer Arbeitsstellung befinden, wobei der linke und rechte Querrahmen jeweils von einem Ausleger getragen werden.
Fig. 9 zeigt eine Vorderansicht des in Fig. 8 dargestellten Pfluges, wobei nun der linke und rechte Querrahmen von ihren jeweiligen Auslegern aus ihren Arbeitsstellungen angehoben sind.
Fig. 10 zeigt eine weitere Vorderansicht des in Fig. 8 dargestellten Pfluges, wobei nun der linke und rechte Querrahmen von ihren jeweiligen Auslegern in eine Transportstellung angehoben sind.

### WEGE ZUR AUSFÜHRUNG DER ERFINDUNG

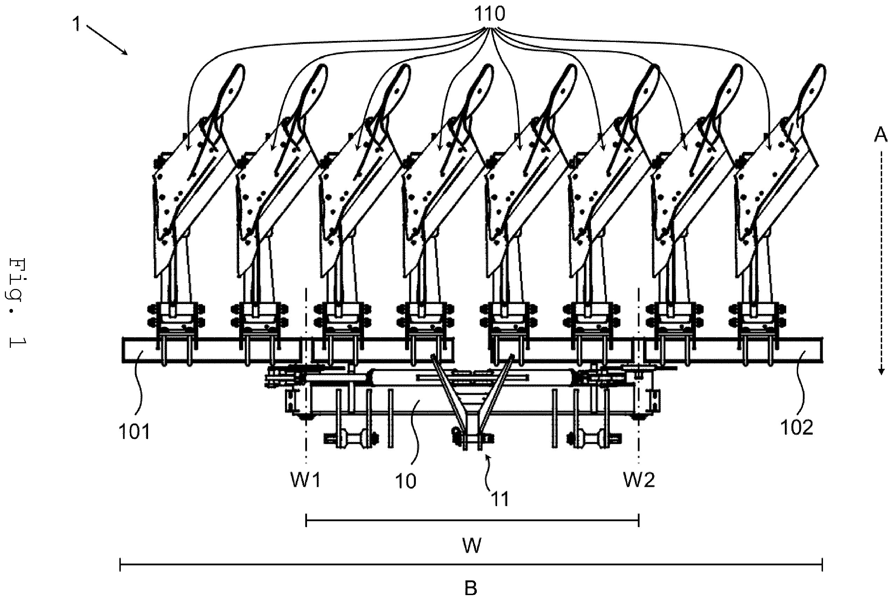

Fig. 1 zeigt eine Draufsicht eines bevorzugten Pfluges 1. Die Arbeitsrichtung A des gezeigten Pfluges ist in der Abbildung mit einem Richtungspfeil kenntlich gemacht. Weiterhin liegt eine nicht gezeigte Erdoberfläche, die von dem Pflug 1 bearbeitet wird, im Wesentlichen parallel zur Zeichnungsebene unterhalb des dargestellten Pfluges. In diesem Ausführungsbeispiel weist der Pflug 1 einen Mittelträger 10 auf, an dem eine Befestigungsvorrichtung 11 vorgesehen ist. Die Befestigungsvorrichtung 11 ist dazu ausgebildet, den Pflug 1 mit einer nicht gezeigten Zugmaschine zu verbinden, die sich in Arbeitsrichtung A vor dem Pflug 1 befindet. Zudem weist der Pflug 1 die beiden Querrahmen 101 und 102 auf, die sich quer zur Arbeitsrichtung erstrecken und parallel zur Erdoberfläche ausgerichtet sind. Die beiden Querrahmen 101 und 102 befinden sich in einer Arbeitsstellung und ergänzen sich hierin zu einer Arbeitsbreite B des Pfluges 1. An den beiden Querrahmen 101 und 102 befinden sich regelmäßig beabstandet Pflugkörperpaare 110, die jeweils einen linkswendenden Pflugkörper 111 und einen rechtswendenden Pflugkörper 112 umfassen. In der in Fig. 1 gezeigten Draufsicht sind allerdings nur die Pflugkörper deutlich zu erkennen, die von der Erdoberfläche weggerichtet sind, also in der gezeigten Arbeitsstellung nicht mit der Erdoberfläche wechselwirken. Diese Pflugkörper sind rechtswendende Pflugkörper 112, die sich oberhalb jeweils eines linkswendenden Pflugkörpers 111 befinden. Dies bedeutet also, dass sich der in Fig. 1 gezeigte Pflug 1 in einer linkswendenden Arbeitsstellung befindet.

Der Querrahmen 101 ist drehbar über eine Wendeachse W1 mit dem Mittelträger 10 verbunden. Dies ermöglicht eine Drehung des Querrahmens 101 um die Wendeachse W1. Der Querrahmen 102 ist drehbar über eine Wendeachse W2 mit dem Mittelträger 10 verbunden. Dies ermöglicht eine Drehung des Querrahmens 102 um die Wendeachse W2, die unabhängig von der Drehung des Querrahmens 101 erfolgen kann. Die Wendeachsen W1 und W2 sind parallel zur Arbeitsrichtung A ausgerichtet. Zudem weisen sie in einer Breitenrichtung quer zur Arbeitsrichtung A einen Wendeachsenabstand W auf.

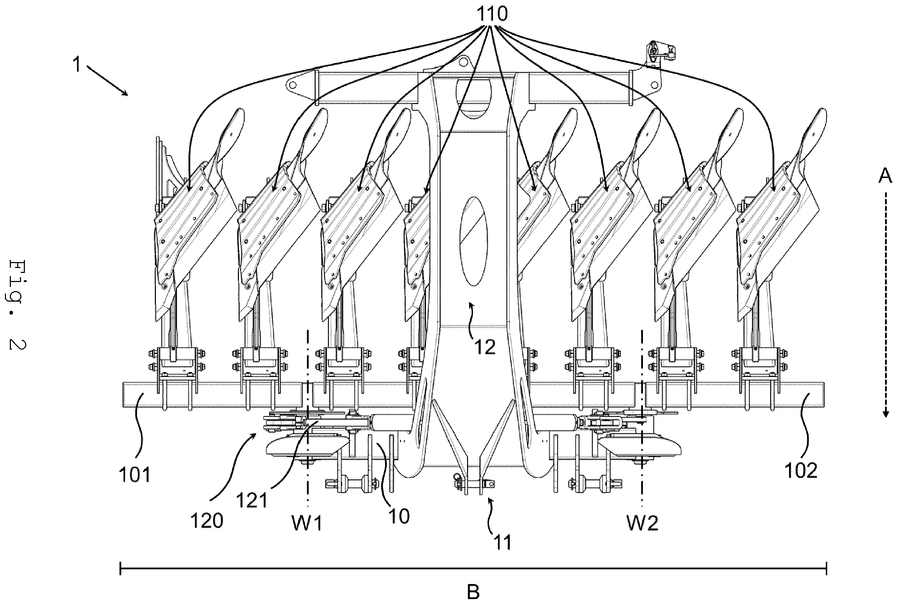

Fig. 2 zeigt eine weitere Draufsicht eines bevorzugten Pfluges 1. Im Unterschied zu dem in Fig. 1 gezeigten Pflug weist Pflug 1 bei dieser Ausführungsform eine an dem Mittelrahmen 10 befestigte Anhängevorrichtung 12 auf. Diese Anhängevorrichtung 12 überragt die Querrahmen 101 und 102 sowie die von diesen getragenen Pflugkörperpaare 110 in Arbeitsrichtung A gesehen nach hinten und verläuft wie eine Brücke oberhalb der Pflugkörperpaare 110. An eine solche Anhängevorrichtung können im Bedarfsfall weitere dem Pflug nachfolgenden Bodenbearbeitungsgeräte angehängt werden. Die Brückenform der Anhängevorrichtung 12 stellt sicher, dass die beiden Querrahmen 101 und 102 samt der von ihnen getragenen Pflugkörperpaare ohne Kollision mit der Anhängevorrichtung 12 zwischen rechtswendender und linkswendender Arbeitsstellung drehbar sind. Der Anbau einer solchen Anhängevorrichtung 12 ist nicht auf die in Fig. 2 gezeigte Ausführungsform beschränkt und kommt für alle Ausführungsformen der vorliegenden Erfindung in Betracht.

Für jede der Wendeachsen W1 und W2 weist der Pflug 1 einen Drehmechanismus 120 zum Drehen des jeweiligen Querrahmens 101 und 102 auf. Der Drehmechanismus 120 wird über einen Stellantrieb 121 betätigt. Der Stellantrieb 121 ist in der gezeigten Ausführungsform als Hydraulikzylinder ausgestaltet.

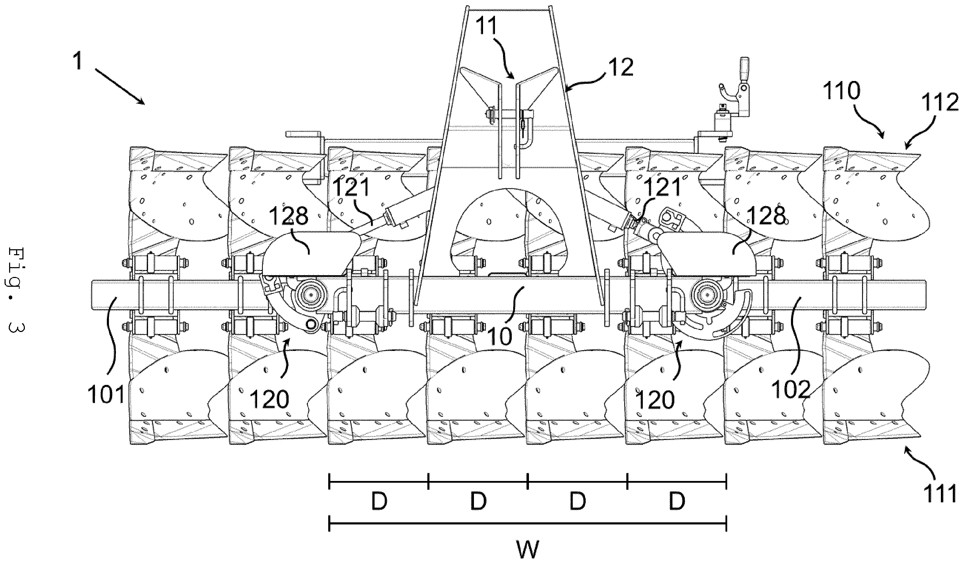

Fig. 3 zeigt eine Vorderansicht entgegen der Arbeitsrichtung A des in Fig. 2 dargestellten Pfluges 1. In dieser Ansicht ist deutlich zu erkennen, dass die Pflugkörperpaare 110 jeweils einen linkswendenden Pflugkörper 111 und einen rechtswendenden Pflugkörper 112 umfassen. Diese paarweise Anordnung ist zwar die bevorzugte jedoch keineswegs einzig mögliche Anordnung. Die Querrahmen 101 und 102 tragen jeweils vier Pflugkörperpaare 110, d.h. jeweils vier linkswendende Pflugkörper 111 und vier rechtswendende Pflugkörper 112. Die Pflugkörperpaar-Anzahl P der beiden Querrahmen 101, 102 beträgt insgesamt also P = 8. Jeder der Querrahmen 101, 102 trägt zu beiden Seiten seiner zugehörigen Wendeachse W1, W2 gleich viele Pflugkörper 111, 112, nämlich jeweils vier. Dies führt bezogen auf die Wendeachsen W1, W2 zu einer ausgewogenen Gewichtsverteilung auf den Querrahmen 101, 102. Um eine Drehung der Querrahmen 101, 102 zu bewirken, wird somit unabhängig von der Drehrichtung ein annähernd gleiches Drehmoment benötigt, das durch den Drehmechanismus 120 aufgebracht werden muss.

Die Pflugkörper 111, 112 sind auf den jeweiligen Querrahmen 101, 102 in jeweils gleichen Paar-Abständen D in Breitenrichtung angeordnet, wobei hiermit der Abstand sich entsprechender Punkte auf benachbarten Pflugkörperpaaren gemeint ist. Der Wendeachsenabstand W der Wendeachsen W1 und W2 ist so gewählt, dass W = 4D gilt. Dadurch ist gewährleistet, dass der Abstand zwischen dem in Blickrichtung äußerst rechten Pflugkörperpaar 110 am Querrahmen 101 und dem äußerst linken Pflugkörperpaar 110 am Querrahmen 102 dem Paar-Abständen D entspricht. Das Pflugbild einer mit einem solchen Pflug 1 bearbeiteten Erdoberfläche weist somit zwischen den beiden Querrahmen 101 und 102 keine Ungleichmäßigkeit oder gar Lücke auf, was jedoch der Fall wäre, wenn der Wendeachsenabstand W größer wäre.

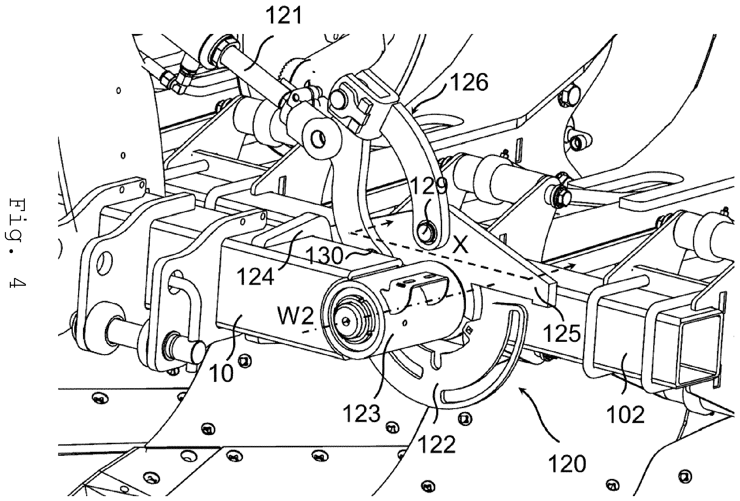

Fig. 4 zeigt eine perspektivische Detailansicht des Drehmechanismus 120 des Querrahmens 102. Die in Fig. 3 gezeigte Blende 128, die den Drehmechanismus 120 teilweise abdeckt, ist in der Darstellung der Fig. 4 nicht gezeigt. In Fig. 4 ist deutlich zu erkennen, dass die Wendeachse W2 des Querrahmens 102 in einem Wendeachsenlager 123 aufgenommen ist, das an einem Ende des Mittelträgers 10 angebracht ist. Eine Sensorscheibe 122 sowie ein Anschlagskörper 125 sind jeweils drehfest mit der Wendeachse W2 verbunden, sodass sie bei einer Drehung des Querrahmens 102 eine Drehung um den gleichen Winkel durchführen. Der als Hydraulikzylinder ausgestaltete Stellantrieb 121 ist über ein Gelenk mit einem Umlenkhebel 126 verbunden, dessen erster Schenkel mit dem Anschlagskörper 125 über ein erstes Schenkelgelenk 129 verbunden ist. Der zweite Schenkel des Umlenkhebels 126 ist über ein zweites Schenkelgelenk 130 (in der Darstellung verdeckt) mit dem Mittelträger 10 verbunden. An dem Mittelträger 10 ist zudem ein Anschlagsklotz 124 befestigt, der als Anschlag für den Anschlagskörper 125 dient und zusammen mit diesem einen mechanischen Neigungsanschlag bildet.

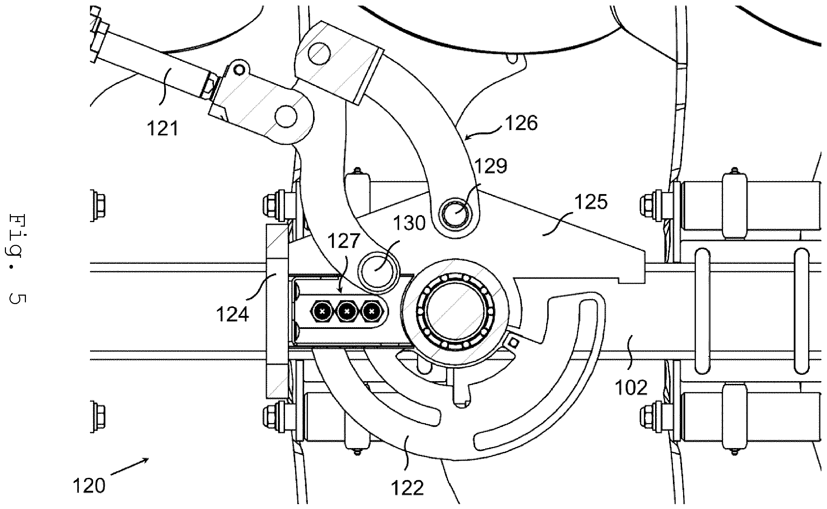

Fig. 5 ist eine vergrößerte Schnittansicht des Drehmechanismus aus Fig. 4. Es ist die Schnittebene dargestellt, in der die Schnittlinie X in Fig. 4 liegt. Der Hydraulikzylinder des Stellantriebs 121 befindet sich in einer eingefahrenen Stellung. In dieser Stellung schlägt der linke Arm des Anschlagskörpers 125 von oben an den Anschlagsklotz 124 an. So ist sichergestellt, dass sich der Querrahmen 102 in seiner ersten Arbeitsstellung befindet und nicht über diese hinwegdrehen kann. Bei einer Drehung des Querrahmens 102 überfährt die Sensorscheibe 122 eine Sensorik 127. Diese ist dazu in der Lage, mittels der Lochbahnen in der Sensorscheibe 122 die Stellung des Querrahmens 102 zu erfassen. Diese Information kann gegebenenfalls an eine zentrale Neigungseinstellungseinrichtung übermittelt werden.

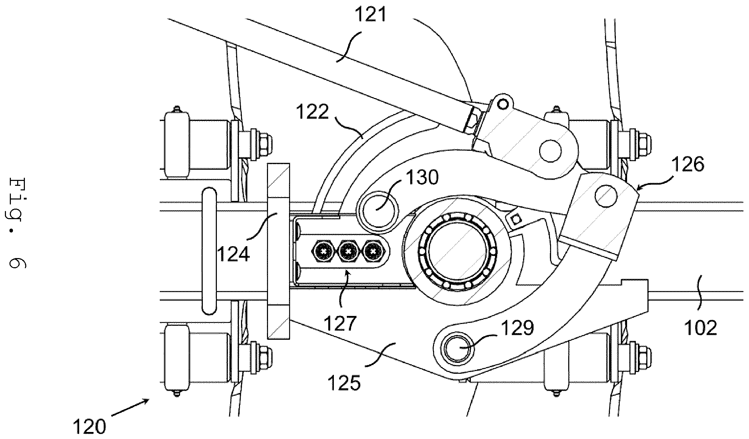

Fig. 6 zeigt die gleiche Ansicht des Drehmechanismus 120 des Querrahmens 102 wie in Fig. 5, wobei sich der Hydraulikzylinder des Stellantriebs 121 jedoch in einer ausgefahrenen Stellung befindet. Bei einem Ausfahren des Hydraulikzylinders wird der Umlenkhebel 126 an seinem zweiten Schenkelgelenk 130 um den Mittelträger 10 gedreht, wodurch der erste Schenkel des Umlenkhebels 126 eine Drehung des Querrahmens 102, der Sensorscheibe 122 und des Anschlagskörpers 125 verursacht. In der ausgefahrenen Stellung ist der Querrahmen 102 und mit ihm der Anschlagskörper 125 sowie die Sensorscheibe 122 im Vergleich zu Fig. 5 auf den Kopf gedreht. Entsprechend befindet sich der Querrahmen 102 im Vergleich zu Fig. 5 in seiner anderen Arbeitsstellung. Der Anschlagskörper 125 schlägt nun mit seinem rechten Arm (bezogen auf die Darstellung in Fig. 5) von unten an den Anschlagsklotz 124 an. Die Geometrien, Abmessungen und gegenseitige Anordnung des Anschlagskörpers und Anschlagsklotzes sind in der gezeigten Ausführungsform so gewählt, dass zwischen dem Anschlag von oben und dem Anschlag von unten eine Drehung um nicht mehr als 180° durchführbar ist. Mit einer geeigneten Wahl der Geometrien, Abmessungen und gegenseitigen Anordnung des Anschlagskörpers und Anschlagsklotzes ist es aber ohne Weiters möglich einen mechanische Neigungsanschlag zu realisieren, bei dem eine größere oder kleinere Drehung zwischen den Anschlägen möglich ist.

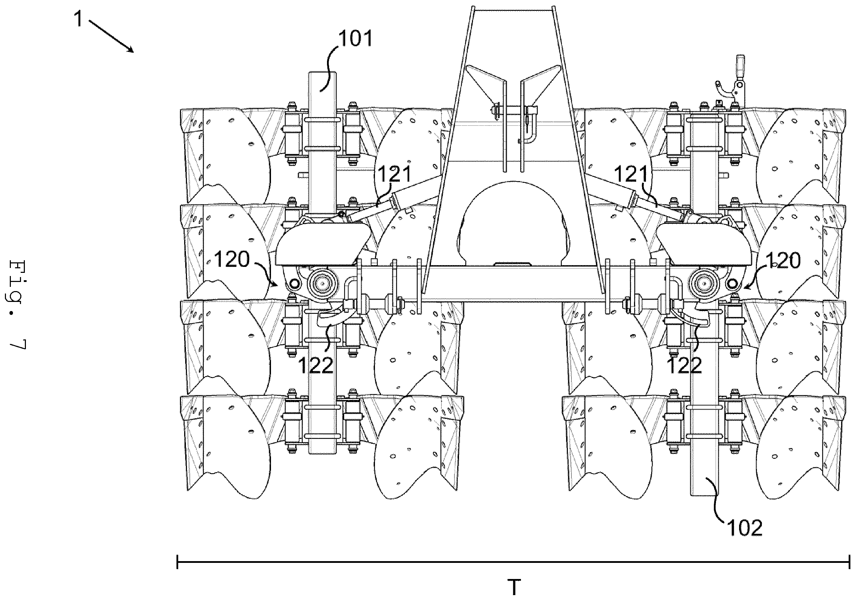

Fig. 7 zeigt in einer Vorderansicht den in Figuren 2 und 3 dargestellten Pflug in seiner Transportstellung. Querrahmen 101 und 102 sind so um ihre Wendeachsen W1 und W2 gedreht, dass sich beide senkrecht zur Erdoberfläche erstrecken. Der Pflug 1 weist nunmehr in der Transportstellung eine Transportbreite T auf, wobei T < B gilt. In der gezeigten Ausführungsform beträgt T <= 3 m.

Im Vergleich zur in Fig. 3 gezeigten linkswendenden Arbeitsstellung des Pfluges 1, ist der als Hydraulikzylinder verwirklichte Stellantrieb 121 des Drehmechanismus 120 für den Querrahmen 101 verkürzt und für den Querrahmen 102 verlängert, um die Querrahmen 101, 102 mittels des Drehmechanismen 120 in ihre jeweilige Transportstellung zu bringen. In der Transportstellung befinden sich beide Hydraulikzylinder also in einer Stellung, in der sie bezogen auf ihre eingefahrene bzw. ausgefahrene Stellung in der linkswendenden Arbeitsstellung des Pfluges 1 um die Hälfte der bis zum Erreichen der ausgefahrenen bzw. eingefahrenen Stellung in der rechtswendenden Arbeitsstellung notwendigen Zylinderhubstrecke ausgefahren bzw. eingefahren sind. Die Hydraulikzylinder sind im Wesentlichen also bis zur Hälfte ausgefahren. Dies entspricht für beide Querrahmen 101, 102 einer Drehung in gleicher Drehrichtung, um von der linkswendenden Arbeitsstellung in die Transportstellung zu kommen.

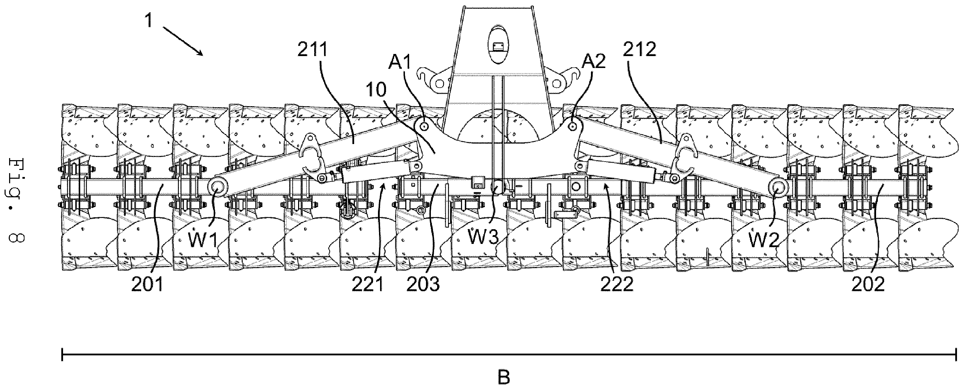

Fig. 8 zeigt eine Vorderansicht eines bevorzugten Pfluges 1 mit drei Querrahmen 201, 202, 203, die sich in der linkswendenden Arbeitsstellung befinden. Querrahmen 201 wird von dem Ausleger 211 an der Wendeachse W1 und Querrahmen 202 von dem Ausleger 212 an der Wendeachse W2 getragen. Der Ausleger 211 ist an einem seiner Enden über Aushebeachse A1 und der Ausleger 212 an einem seiner Enden über Aushebeachse A2 drehbar gelagert und mit einem Mittelträger 10 des Pfluges 1 verbunden. Die Aushebeachsen A1 und A2 stehen senkrecht zur Zeichnungsebene der Fig. 8, Gleiches gilt für die Wendeachsen W1 und W2. Die Arbeitsrichtung A verläuft ebenso senkrecht zur Zeichnungsebene entgegen der Blickrichtung auf Fig. 8. Aushebeachsen A1, A2, Wendeachsen W1, W2 und die Arbeitsrichtung A sind also parallel. Zudem befindet sich in der gezeigten Arbeitsstellung des Pfluges die Aushebeachse A1 oberhalb der Wendeachse W1 und näher zu einer senkrechten Mittenebene durch den Pflug 1. Das Gleiche gilt für die Aushebeachse A2 bezüglich der Wendeachse W2.

Zusätzlich zu den von Auslegern 211, 212 getragenen Querrahmen 201, 202 weist der Pflug 1 einen weiteren Querrahmen 203 auf, der nicht an seiner Wendeachse W3 von einem Ausleger getragen wird. Der Querrahmen 203 befindet sich in der Arbeitsstellung zwischen den äußeren Querrahmen 201 und 202. Die drei Querrahmen 201, 202, 203 erstrecken sich in der Horizontalen senkrecht zur Arbeitsrichtung A, d.h. parallel zu einer nicht gezeigten Erdoberfläche, die sich unterhalb des Pfluges 1 befindet. Die drei Querrahmen 201, 202, 203 ergänzen sich zur einer Arbeitsbreite B. Die Gesamtzahl der Pflugkörperpaare 110, die diese Ausführungsform eines Pfluges aufweist, beträgt sechszehn. Dabei werden jeweils sechs Pflugkörperpaare 110 von den äußeren Querrahmen 201 und 202 getragen und vier Pflugkörperpaare 110 von dem mittleren Querrahmen 203. Zusammen tragen also jeweils zwei benachbarte der Querrahmen 201, 202, 203 zusammen eine Pflugkörperpaar-Anzahl P von zehn.

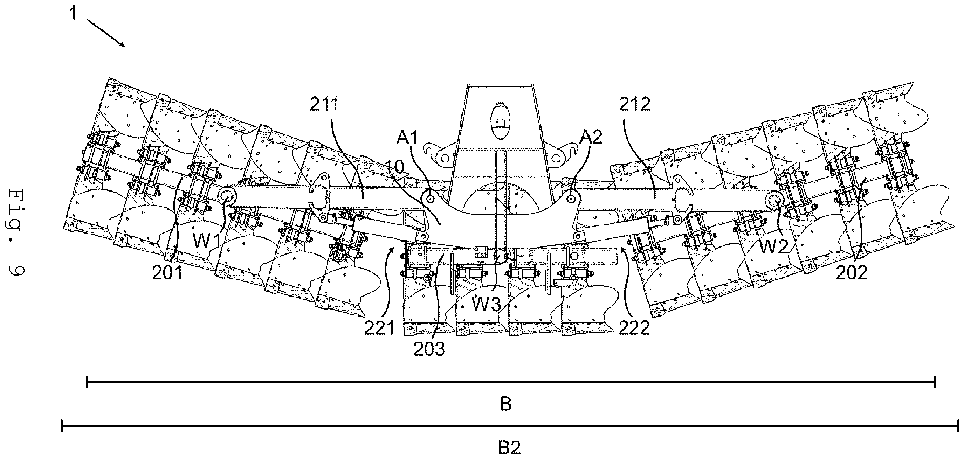

Fig. 9 zeigt den Pflug 1 aus Fig. 8 in einer Stellung, in der die Ausleger 211 und 212 gegenüber der Arbeitsstellung leicht angehoben sind, d.h. die Querrahmen 201 und 202 erstrecken sich nichtmehr parallel zur Erdoberfläche. Zum Anheben der Ausleger 211 und 212 ist ein Klappmechanismus mit Auslegerstellantrieben 221 und 222 vorgesehen, die jeweils an einem ihrer Enden drehbar gelagert mit dem Mittelträger 10 und jeweils am anderen Ende drehbar gelagert mit dem entsprechenden Ausleger 211, 212 verbunden sind. Die Auslegerstellantriebe 221, 222 sind als Hydraulikzylinder ausgeführt, die im Vergleich zur Arbeitsstellung des Pfluges 1 zum Anheben der Querrahmen 201, 202 weiter ausgefahren sind. Weil die Aushebeachsen A1 und A2 in der Arbeitsstellung oberhalb der entsprechenden Wendeachse W1 und W2 liegen, bewegen sich die Querrahmen 201 und 202 zunächst bei dem in Fig. 9 gezeigten Anheben auseinander, d.h. eine momentane Pflugbreite B2 des Pfluges 1 ist in dieser Stellung größer als die Arbeitsbreite B. Dadurch wird sowohl zwischen dem Querrahmen 201 und 203 als auch zwischen dem Querrahmen 202 und 203 Platz geschaffen, sodass die Querrahmen 201, 202, 203 einfacher und ohne miteinander zu kollidieren zwischen linkswendender und rechtswendender Arbeitsstellung gedreht werden können.

Eine Drehung der Ausleger 211, 212 um die Aushebeachsen A1, A2 ermöglicht zudem, den Abstand der Wendeachse W1, W2 zu der Erdoberfläche zu vergrößern. In der in Fig. 9 gezeigten Stellung des Pfluges 1 ist es aufgrund der erhöhten Bodenfreiheit der Querrahmen 201, 202 daher möglich, sie um 180° um ihre entsprechenden Wendeachsen W1, W2 zu drehen. Nachdem eine solche Drehung erfolgt ist, können die Ausleger 211, 212 wieder abgesenkt werden, wodurch die Querrahmen 201, 202 ihre Arbeitsstellung einnehmen. Das Absenken kann aber auch bereits während der Drehung eingeleitet werden, sofern die Bodenfreiheit für das Beenden der Drehung ausreichend ist.

Der Klappmechanismus zum Anheben der Ausleger 211, 212 ist unabhängig vom Drehmechanismus zur Drehung der Querrahmen 201, 202, 203. Es sind aber auch Ausführungsformen denkbar, in denen eine Sequenzsteuerung eine Koordination zwischen dem Klappmechanismus und dem Drehmechanismus vornimmt oder in denen der Drehmechanismus das Klappen der Ausleger 211, 212 über eine Kinematik mitbewirkt, um für das Anheben der Ausleger 211, 212, das Drehen der Querrahmen 201, 202 um 180° bezüglich ihrer entsprechenden Ausleger und das Absenken der Ausleger zu sorgen. Das Drehen der Querrahmen 201, 202 kann dabei teilweise gleichzeitig zum Anheben und/oder Absenken der Ausleger 211, 212 geschehen, um die Dauer des Vorgangs zu verkürzen. Die Kinematik oder Sequenzsteuerung kann auch dazu ausgestaltet sein, den mittleren Querrahmen 203 zwischen seiner linkswendenden und rechtswendenden Arbeitsstellung zu drehen. Mittels der Sequenzsteuerung kann sichergestellt werden, dass ein Drehen des Querrahmes 203 zeitlich und geometrisch versetzt vom Drehen der Querrahmen 201 oder 202 ist.

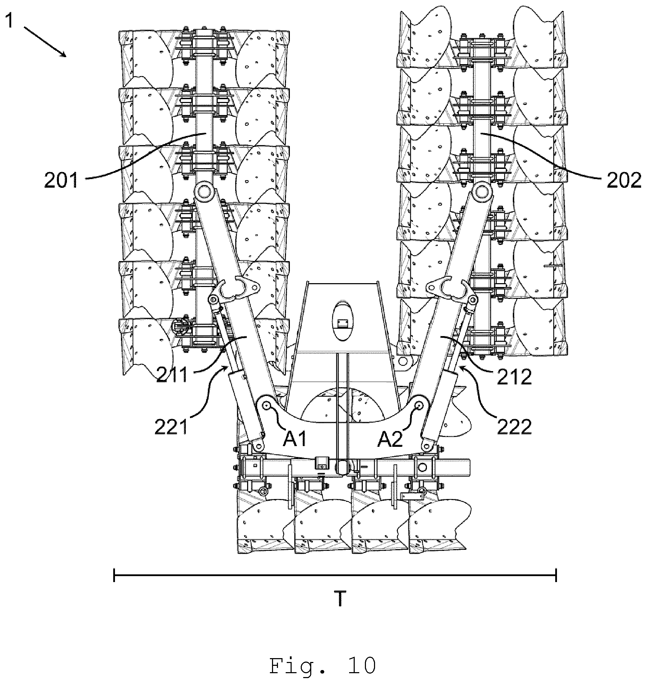

Fig. 10 zeigt den Pflug 1 aus Figuren 8 und 9, bei dem sich die Querrahmen 201, 202 nun in einer Transportstellung befinden. Mittels der Auslegerstellantriebe 221 und 222 sind die Ausleger 211 und 212 soweit um die Aushebeachsen A1 und A2 gedreht, dass sich die Querrahmen 201 und 202 senkrecht zur Erdoberfläche erstrecken. Im Vergleich zur Arbeitsstellung des Pfluges 1, die in Fig. 8 dargestellt ist, und der Stellung, die in Fig. 9 dargestellt ist, sind die Querrahmen 201 und 202 relativ zur ihren entsprechenden Auslegern 211 und 212 nicht verdreht. Der Pflug 1 nimmt in der gezeigten Transportstellung eine Transportbreite von T <= 3 m ein.

### BEZUGSZEICHENLISTE

- 1: Pflug
- 10: Mittelträger
- 11: Befestigungsvorrichtung
- 12: Anhängevorrichtung
- 101, 102, 201, 202, 203: Querrahmen
- 110: Pflugkörperpaar
- 111: linkswendender Pflugkörper
- 112: rechtswendender Pflugkörper
- 120: Drehmechanismus
- 121: Stellantrieb
- 122: Sensorscheibe
- 123: Wendeachsenlager
- 124: Anschlagsklotz
- 125: Anschlagskörper
- 126: Umlenkhebel
- 127: Sensorik
- 128: Blende
- 129: erstes Schenkelgelenk
- 130: zweites Schenkelgelenk
- 211, 212: Ausleger
- 221, 222: Auslegerstellantrieb
- A: Arbeitsrichtung
- A1, A2: Aushebeachse
- B: Arbeitsbreite
- B2: momentane Pflugbreite
- D: Pflugkörperpaar-Abstand
- P: Pflugkörperpaar-Anzahl
- T: Transportbreite
- W: Wendeachsenabstand
- W1, W2, W3: Wendeachse

## Patentansprüche

1. Pflug (1) zum Bearbeiten einer Erdoberfläche entlang einer Arbeitsrichtung (A), der zumindest zwei Querrahmen (101, 102, 201, 202, 203) aufweist, welche sich in einer Arbeitsstellung entlang einer Breitenrichtung quer zur Arbeitsrichtung (A) erstrecken, um sich zu einer Arbeitsbreite (B) zu ergänzen,
wobei jeder der Querrahmen (101, 102, 201, 202, 203) zumindest einen rechtswendenden Pflugkörper (112) und zumindest einen linkswendenden Pflugkörper (111) trägt,
wobei jedem der Querrahmen (101, 102, 201, 202, 203) jeweils eine Wendeachse (W1, W2, W3) zugeordnet ist, um die er drehbar angeordnet ist, wobei die Wendeachsen (W1, W2, W3) parallel zur Arbeitsrichtung (A) ausgerichtet und in der Breitenrichtung beabstandet nebeneinander angeordnet sind.

2. Pflug (1) nach Anspruch 1, wobei der Pflug für je eine oder mehrere der Wendeachsen (W1, W2, W3) einen Drehmechanismus (120) zum Drehen des jeweiligen Querrahmens (101, 102, 201, 202, 203) oder der jeweiligen Querrahmen (101, 102, 201, 202, 203) um seine Wendeachse (W1, W2, W3) oder ihre Wendeachsen (W1, W2, W3) zwischen einer linkswendenden Arbeitsstellung und einer rechtswendenden Arbeitsstellung aufweist,
wobei der Drehmechanismus (120) zumindest einen Stellantrieb (121) aufweist.

3. Pflug (1) nach Anspruch 2, wobei der Drehmechanismus (120) derart ausgestaltet ist, dass der Querrahmen (101, 102, 201, 202, 203) in der linkswendenden Arbeitsstellung und/oder der rechtswendenden Arbeitsstellung starr festgesetzt ist, oder dass die linkswendende Arbeitsstellung und/oder die rechtswendende Arbeitsstellung des jeweiligen Querrahmens (101, 102, 201, 202, 203) mittels eines mechanischen Neigungsanschlags oder einer zentralen Neigungseinstellungseinrichtung verstellbar ist.

4. Pflug (1) nach einem der Ansprüche 1 bis 3, wobei die Wendeachsen (W1, W2, W3) jeweils derart am jeweiligen Querrahmen (101, 102, 201, 202, 203) angeordnet sind, dass sich eine Anzahl von Pflugkörpern (111, 112), die der jeweilige Querrahmen (101, 102, 201, 202, 203) auf einer Seite seiner Wendeachse (W1, W2, W3) trägt, von einer Anzahl von Pflugkörpern (111, 112), die er auf der anderen Seite seiner Wendeachse (W1, W2, W3) trägt, höchstens um sechs, bevorzugt um fünf, weiter bevorzugt um vier, noch weiter bevorzugt um drei, darüber bevorzugt um zwei, besonders bevorzugt um eins, am meisten bevorzugt nicht, unterscheidet.

5. Pflug (1) nach einem der Ansprüche 1 bis 4, wobei eine Transportbreite (T) des Pfluges (1) kleiner als die Arbeitsbreite (B) ist und bevorzugt zwischen 1,5 m und 4,5 m, weiter bevorzugt zwischen 2,5 m und 3,5 m, noch weiter bevorzugt zwischen 2,9 m und 3 m beträgt,
wobei zumindest einer der Querrahmen (101, 102, 201, 202) in eine Transportstellung drehbar ist, in der er sich senkrecht zur Erdoberfläche erstreckt,
wobei der zumindest eine Querrahmen (101, 102, 201, 202) bevorzugt durch Drehen um seine jeweilige Wendeachse in die Transportstellung drehbar ist.

6. Pflug (1) nach einem der Ansprüche 1 bis 5, der zumindest drei der Querrahmen (201, 202, 203) aufweist, wobei zumindest einer der Querrahmen (201, 202) von einem Ausleger (211, 212) an seiner Wendeachse (W1, W2) getragen ist,
wobei der Ausleger (211, 212) für ein Anheben des durch ihn getragenen Querrahmens (201, 202) aus der Arbeitsstellung um eine Aushebeachse (A1, A2) drehbar ist, die parallel zur Wendeachse (W1, W2) des Querrahmens (201, 202) ausgerichtet ist.

7. Pflug (1) nach Anspruch 6, wobei in der Arbeitsstellung die Aushebeachse (A1, A2) oberhalb der Wendeachse (W1, W2) und näher zu einer horizontalen Mitte des Pflugs als die Wendeachse (W1, W2) angeordnet ist.

8. Pflug (1) nach Anspruch 5 und Anspruch 6 oder 7, wobei der Ausleger (211, 212) in der Arbeitsstellung und in der Transportstellung gegenüber seinem Querrahmen (201, 202) gleich ausgerichtet ist.

9. Pflug (1) nach einem der Ansprüche 1 bis 8, der eine gleiche Anzahl an rechtswendenden Pflugkörpern (112) und linkswendenden Pflugköper (111) aufweist,
wobei jeweils ein rechtswendender Pflugkörper (112) und ein linkswendender Pflugkörper (111) ein Pflugkörperpaar (110) sind,
wobei insbesondere jeweils zwei benachbarte der Querrahmen (101, 102, 201, 202, 203) zusammen eine Pflugkörperpaar-Anzahl P tragen und die Pflugkörperpaare (110) in der Arbeitsstellung jeweils um einen Paar-Abstand D in der Breitenrichtung voneinander beabstandet sind, wobei die Wendeachsen (W1, W2, W3) der benachbarten Querrahmen um einen Wendeachsen-Abstand W in der Breitenrichtung voneinander beabstandet sind, wobei W = P/2 * D gilt.

10. Pflug (1) nach einem der Ansprüche 1 bis 9, wobei bei einer Drehung eines ersten der Querrahmen (101, 102, 201, 202, 203) um seine Wendeachse (W1, W2, W3) aus seiner Arbeitsstellung heraus und in seine Arbeitsstellung hinein ein erster Bereich der von dem ersten der Querrahmen (101, 102, 201, 202, 203) getragenen Pflugkörper (111, 112) eine erste Umlaufbahn um die Wendeachse (W1, W2, W3) bestimmt und bei einer Drehung eines dem ersten Querrahmen benachbarten zweiten der Querrahmen (101, 102, 201, 202, 203) um seine Wendeachse (W1, W2, W3) aus seiner Arbeitsstellung heraus und in seine Arbeitsstellung hinein ein zweiter Bereich der von dem zweiten der Querrahmen (101, 102, 201, 202, 203) getragenen Pflugkörper (111, 112) eine zweite Umlaufbahn um die Wendeachse (W1, W2, W3) bestimmt,
wobei sich die erste Umlaufbahn und die zweite Umlaufbahn schneiden,
wobei die Drehung des ersten der Querrahmen (101, 102, 201, 202, 203) und die Drehung des zweiten der Querrahmen (101, 102, 201, 202, 203) ohne eine Kollision des ersten Bereichs mit dem zweiten Bereich durchführbar sind.

11. Pflug (1) nach einem der Ansprüche 1 bis 10, wobei der Pflug (1) eine Sequenzsteuerung aufweist, die Mittel zur Ausführung eines getakteten und/oder zwangsgesteuerten Drehungsverfahrens umfasst,
wodurch zwei benachbarte der Querrahmen (101, 102, 201, 202, 203) jeweils zeitlich versetzt und/oder geometrisch versetzt und/oder positionsgesteuert aus ihrer Arbeitsstellung heraus und in ihre Arbeitsstellung hinein gedreht werden.

## Claims

1. A plough (1) for cultivating an earth surface along a working direction (A), which comprises at least two cross frames (101, 102, 201, 202, 203), which in a working position extend along a width direction transversely to the working direction A in order to complement one another to a working width (B),
wherein each of the cross frames (101, 102, 201, 202, 203) carries at least one right-turning plough body (112) and at least one left-turning plough body (111), wherein each of the cross frames (101, 102, 201, 202, 203) is assigned a turning axis (W1, W2, W3) each about which it is rotatably arranged, wherein the turning axes (W1, W2, W3) are oriented parallel to the working direction (A) and are arranged spaced apart next to one another in the width direction.

2. The plough (1) according to Claim 1, wherein the plough for each one or more of the turning axes (W1, W2, W3) comprises a turning mechanism (120) for turning the respective cross frame (101, 102, 201, 202, 203) or the respective cross frames (101, 102, 201, 202, 203) about its turning axis (W1, W2, W3) or their turning axes (W1, W2, W3) between a left-turning working position and a right-turning working position, wherein the turning mechanism (120) comprises at least one actuating drive (121).

3. The plough (1) according to Claim 2,
wherein the turning mechanism (120) is configured in such a manner that the cross frame (101, 102, 201, 202, 203) in the left-turning working position and/or the right-turning working position is rigidly fixed or that the left-turning working position and/or the right-turning working position of the respective cross frame (101, 102, 201, 202, 203) is adjustable by means of a mechanical inclination stop or a central inclination adjusting device.

4. The plough (1) according to any one of the Claims 1 to 3,
wherein the turning axes (W1, W2, W3) are each arranged on the respective cross frame (101, 102, 201, 202, 203) in such a manner that a number of plough bodies (111, 112), which the respective cross frame (101, 102, 201, 202, 203) carries on a side of its turning axis (W1, W2, W3), differs from a number of plough bodies (111, 112) which it carries on the other side of its turning axis (W1, W2, W3), maximally by 6, preferably by 5, further preferably by 4, even more preferably by 3, preferably by 2, particularly preferably by 1, most preferably not at all.

5. The plough (1) according to any one of the Claims 1 to 4,
wherein a transport width (T) of the plough (1) is smaller than the working width (B) and preferably is between 1.5 m and 4.5 m, further preferably between 2.5 m and 3.5 m, even further preferably between 2.9 m and 3 m,
wherein at least one of the cross frames (101, 102, 201, 202) is rotatable in a transport position in which it extends perpendicularly to the earth surface, wherein the at least one cross frame (101, 102, 201, 202) are rotatable into the transport position preferably by turning about its respective turning axis.

6. The plough (1) according to any one of the Claims 1 to 5, which comprises at least three of the cross frames (201, 202, 203),
wherein at least one of the cross frames (201, 202,) is carried on its turning axis (W1, W2) by a boom (211, 212),
wherein the boom (211, 212) for lifting the cross frame (201, 202,) carried by it out of the working position is rotatable about a lifting axis (A1, A2) which is oriented parallel to the turning axis (W1, W2) of the cross frame (201, 202).

7. The plough (1) according to Claim 6,
wherein in the working position the lifting axis (A1, A2) is arranged above the turning axis (W1, W2) and nearer to a horizontal centre of the plough than the turning axis (W1, W2).

8. The plough (1) according to Claim 5 and Claim 6 or 7, wherein the boom (211, 212) is oriented in the working position and in the transport position identically relative to its cross frame (201, 202).

9. The plough (1) according to any one of the Claims 1 to 8,
which comprises a same number of right-turning plough bodies (112) and left-turning plough bodies (111),
wherein a right-turning plough body (112) and a left-turning plough body (111) each are a plough body pair (110),
wherein in particular each two adjacent of the cross frames (101, 102, 201, 202, 203) together carry a plough body pair number P and the plough body pairs (110) in the working position are each spaced apart from one another in the width direction by a pair distance D, wherein the turning axes (W1, W2, W3) of the adjacent cross frames are spaced apart from one another by a turning axis distance W in the width direction, wherein W = P/2*D.

10. The plough (1) according to any one of the Claims 1 to 9,
wherein upon a rotation of a first of the cross frames (101, 102, 201, 202, 203) about its turning axis (W1, W2, W3) out of its working position and into its working position a first region of the plough bodies (111, 112) carried by the first of the cross frames (101, 102, 201, 202, 203) defines a first orbit about the turning axis (W1, W2, W3) and upon a rotation of a second of the cross frames (101, 102, 201, 202, 203) adjacent to the first cross frame about its turning axis (W1, W2, W3) out of its working position and into its working position, a second region of the plough bodies (111, 112) carried by the second of the cross frames (101, 102, 201, 202, 203) defines a second orbit about the turning axis (W1, W2, W3),
wherein the first orbit and the second orbit intersect,
wherein the rotation of the first of the cross frames (101, 102, 201, 202, 203) and the rotation of the second of the cross frames (101, 102, 201, 202, 203) can be carried out without the first region colliding with the second region.

11. The plough (1) according to any one of the Claims 1 to 10,
wherein the plough (1) comprises a sequential control which includes means for carrying out a clocked and/or positively controlled turning method,
as a result of which two adjacent of the cross frames (101, 102, 201, 202, 203) are turned in each case offset in time and/or geometry and/or in a position-controlled manner are turned out of their working position and into their working position.

## Revendications

1. Charrue (1), destinée à travailler une surface de sol le long d'une direction de travail (A), qui comporte au moins deux cadres transversaux (101, 102, 201, 202, 203), lesquels dans une position de travail s'étendent le long d'une direction de la largeur à la transversale de la direction de travail (A), pour se compléter en une largeur de travail (B),
chacun des cadres transversaux (101, 102, 201, 202, 203) portant au moins un corps de charrue (112) tournant vers la droite et au moins un corps de charrue (111) tournant vers la gauche,
à chacun des cadres transversaux (101, 102, 201, 202, 203) étant associé respectivement un axe de retournement (W1, W2, W3), autour duquel il est placé de manière rotative, les axes de retournement (W1, W2, W3) étant orientés à la parallèle de la direction de travail (A) et dans la direction de la largeur, étant placés côte à côte avec un écart.

2. Charrue (1) selon la revendication 1, la charrue comportant pour chaque fois un ou plusieurs des axes de retournement (W1, W2, W3) un mécanisme de rotation (120), destiné à faire tourner le cadre transversal (101, 102, 201, 202, 203) respectif ou les cadres transversaux (101, 102, 201, 202, 203) respectifs autour de son axe de retournement (W1, W2, W3) ou de leurs axes de retournement (W1, W2, W3) entre une position de travail tournant vers la gauche et une position de travail tournant vers la droite,
le mécanisme de rotation (120) comportant au moins un servomoteur (121).

3. Charrue (1) selon la revendication 2, le mécanisme de rotation (120) étant conçu de telle sorte que dans la position de travail tournant vers la gauche et / ou dans la position de travail tournant vers la droite, les cadres transversaux (101, 102, 201, 202, 203) soient immobilisés de manière rigide ou que la position de travail tournant vers la gauche et / ou la position de travail tournant vers la droite du cadre transversal (101, 102, 201, 202, 203) respectif soit ajustable au moyen d'une butée d'inclinaison mécanique ou d'un système centralisé de réglage de l'inclinaison.

4. Charrue (1) selon l'une quelconque des revendications 1 à 3, les axes de retournement (W1, W2, W3) étant placés respectivement sur le cadre transversal (101, 102, 201, 202, 203) respectif de telle sorte qu'un certain nombre de corps de charrue (111, 112) que porte le cadre transversal (101, 102, 201, 202, 203) respectif sur un côté de son axe de retournement (W1, W2, W3) se différencie d'un certain nombre de corps de charrue (111, 112) qu'il porte de l'autre côté de son axe de retournement (W1, W2, W3) d'un maximum de six, de préférence de la valeur de cinq, de manière plus préférentielle de la valeur de quatre, de manière encore plus préférentielle de la valeur de trois, de manière plus préférentielle par rapport à celle-ci, de la valeur de deux, de manière particulièrement préférentielle, de la valeur de un, de manière la plus préférentielle, de rien.

5. Charrue (1) selon l'une quelconque des revendications 1 à 4, une largeur de transport (T) de la charrue (1) étant inférieure à la largeur de travail (B) et étant comprise de préférence entre 1,5 et 4, 5 m, de manière plus préférentielle, entre 2,5 m et 3,5 m, de manière encore plus préférentielle, entre 2,9 m et 3 m,
au moins l'un des cadres transversaux (101, 102, 201, 202) étant rotatif dans une position de transport, dans laquelle il s'étend à la perpendiculaire de la surface de sol,
l'au moins un cadre transversal (101, 102, 201, 202) étant rotatif de préférence par rotation autour de son axe de retournement respectif dans la position de transport.

6. Charrue (1) selon l'une quelconque des revendications 1 à 5, qui comporte au moins trois des cadres transversaux (201, 202, 203), au moins l'un des cadres transversaux (201, 202) étant porté par une flèche (211, 212) sur son axe de retournement (W1, W2),
la flèche (211, 212) étant rotative pour un levage du cadre transversal (201, 202) qu'elle porte de la position de travail autour d'un axe de levage (Al, A2), qui est orienté à la parallèle de l'axe de retournement (W1, W2) du cadre transversal (201, 202).

7. Charrue (1) selon la revendication 6, dans la position de travail, l'axe de levage (Al, A2) étant placé au-dessus de l'axe de retournement (W1, W2) et plus près d'un centre horizontal de la charrue que l'axe de retournement (W1, W2).

8. Charrue (1) selon la revendication 5 et la revendication 6 ou 7, dans la position de travail et dans la position de transport, la flèche (211, 212) étant orientée à l'identique par rapport à son cadre transversal (201, 202).

9. Charrue (1) selon l'une quelconque des revendications 1 à 8, qui comporte un nombre identique de corps de charrue (112) tournant vers la droite et de corps de charrue (111) tournant vers la gauche,
respectivement un corps de charrue (112) tournant vers la droite et un corps de charrue (111) tournant vers la gauche étant une paire (110) de corps de charrue,
notamment respectivement deux voisins des cadres transversaux (101, 102, 201, 202, 203) portant ensemble un certain nombre P de paires de corps de charrue et dans la position de travail, les paires (110) de corps de charrue étant écartées mutuellement respectivement d'un écart D entre paires dans la direction de la largeur, les axes de retournement (W1, W2, W3) des cadres transversaux voisins étant écartés mutuellement d'un écart W d'axe de retournement dans la direction de la largeur, W = P/2 * D étant applicable.

10. Charrue (1) selon l'une quelconque des revendications 1 à 9, lors d'une rotation d'un premier des cadres transversaux (101, 102, 201, 202, 203) autour de son axe de retournement (W1, W2, W3) hors de sa position de travail et dans sa position de travail, une première zone des corps de charrue (111, 112) portés par le premier des cadres transversaux (101, 102, 201, 202, 203) déterminant une première trajectoire de circulation autour de l'axe de retournement (W1, W2, W3) et lors d'une rotation d'un deuxième des cadres transversaux (101, 102, 201, 202, 203) voisins du premier cadre transversal autour de son axe de retournement (W1, W2, W3) hors de sa position de travail et dans sa position de travail, une deuxième zone des corps de charrue (111, 112) portés par le deuxième des cadres transversaux (101, 102, 201, 202, 203) déterminant une deuxième trajectoire de circulation autour de l'axe de retournement (W1, W2, W3),
la première trajectoire de circulation et la deuxième trajectoire de circulation se recoupant,
la rotation du premier des cadres transversaux (101, 102, 201, 202, 203) et la rotation du deuxième des cadres transversaux (101, 102, 201, 202, 203) étant réalisables sans une quelconque collision de la première zone avec la deuxième zone.

11. Charrue (1) selon l'une quelconque des revendications 1 à 10, la charrue (1) comportant une commande séquentielle, qui comprend des moyens destinés à réaliser un procédé de rotation cadencé et / ou à commande forcée,
suite à quoi, deux voisins des cadres transversaux (101, 102, 201,202, 203) étant tournés respectivement avec un décalage temporaire et / ou un décalage géométrique et / ou en position commandée hors de leur position de travail et dans leur position de travail.
